(19) 

Europäisches
Patentamt
European
Patent Office
Office européen
des brevets

(11)  **EP 4 550 515 A1**

(12)  **EUROPEAN PATENT APPLICATION**
published in accordance with Art. 153(4) EPC

(43) Date of publication:
07.05.2025  Bulletin 2025/19

(21) Application number: 23831917.2

(22) Date of filing: 29.06.2023

(51) International Patent Classification (IPC):
$H01M\ 10/0587^{(2010.01)}$    $H01M\ 10/0567^{(2010.01)}$
$H01M\ 10/0569^{(2010.01)}$    $H01M\ 50/533^{(2021.01)}$
$H01M\ 50/538^{(2021.01)}$    $H01M\ 10/052^{(2010.01)}$
$H01M\ 4/525^{(2010.01)}$    $H01M\ 4/505^{(2010.01)}$
$H01M\ 4/48^{(2010.01)}$    $H01M\ 4/587^{(2010.01)}$

(52) Cooperative Patent Classification (CPC):
H01M 4/36; H01M 4/48; H01M 4/505; H01M 4/525;
H01M 4/587; H01M 10/052; H01M 10/0567;
H01M 10/0569; H01M 10/0587; H01M 50/533;
H01M 50/538; Y02E 60/10; Y02P 70/50

(86) International application number:
PCT/KR2023/009087

(87) International publication number:
WO 2024/005559 (04.01.2024 Gazette 2024/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.06.2022  KR 20220079872

(71) Applicant: **LG Energy Solution, Ltd.**
**Seoul 07335 (KR)**

(72) Inventors:
• **SHIN, Won Kyung**
  **Daejeon 34122 (KR)**
• **TAKEUCHI, Takashi**
  **Daejeon 34122 (KR)**
• **KO, Hyeon Min**
  **Daejeon 34122 (KR)**
• **LEE, Kwan Hee**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **CYLINDRICAL LITHIUM SECONDARY BATTERY**

(57) The present invention relates to a cylindrical type lithium secondary battery including a jelly-roll type electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can, wherein the electrolyte includes a lithium salt, an organic solvent, and lithium difluorophosphate, vinylene carbonate, and 1,3-propane sultone as additives, and satisfies Equation (1).

$$\text{Equation (1): } 3.5 \leq W_{LiDFP}/(W_{VC} + W_{PS}) \times \Phi/H \times 100 \leq 20$$

EP 4 550 515 A1

[FIG. 3]

**Description**

**TECHNICAL FIELD**

[Cross-reference to Related Application]

This application claims priority from Korean Patent Application No. 10-2022-0079872, filed on June 29, 2022, the disclosure of which is incorporated by reference herein.

[Technical Field]

The present invention relates to a cylindrical type lithium secondary battery.

**BACKGROUND ART**

Demand for lithium secondary batteries as an energy source has been significantly increased with technological advances in electric vehicles and portable electronic devices.
Particularly, as demand for high-capacity batteries has been increased with the recent technological advances in electric vehicles, development of bulky, large-sized cylindrical type batteries has been required. With respect to a small-sized cylindrical type battery commonly used in the past, that is, a cylindrical type battery with a form factor of 1865 or 2170, high rapid charging performance was not required.
However, with respect to the large-sized cylindrical type battery, since it is used in electric vehicles, rapid charging characteristics are becoming very important. Since an increase in normal cross-sectional area of the large-sized cylindrical type battery does not reach an increase in volume, an amount of heat generated in the battery is increased as the size of the battery is increased, and, as a result, risk of explosion is increased and a problem, such as reduced output, occurs. Also, in a case in which rapid charging is performed at a high voltage, a case may occur in which the battery is rapidly degraded due to precipitation of lithium from a negative electrode, and a problem may also occur in which the battery is degraded or ignited while a lot of heat is generated around an electrode tab during a short period of time.
Thus, there is a need to develop a cylindrical type battery having excellent life characteristics and rapid charging characteristics as well as a large volume so as to achieve high capacity.

**DISCLOSURE OF THE INVENTION**

**TECHNICAL PROBLEM**

An aspect of the present invention provides a large-capacity cylindrical type lithium secondary battery with excellent overall performance such as output characteristics, life characteristics, and rapid charging characteristics.

**TECHNICAL SOLUTION**

According to an embodiment, the present invention provides a cylindrical type lithium secondary battery including a jelly-roll type electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can, wherein the electrolyte includes a lithium salt, an organic solvent, and lithium difluorophosphate, vinylene carbonate, and 1,3-propane sultone as additives, and satisfies Equation (1).

$$\text{Equation (1)}: 3.5 \leq W_{\text{LiDFP}}/(W_{\text{VC}} + W_{\text{PS}}) \times \Phi/H \times 100 \leq 20$$

In Equation (1), $W_{\text{LiDFP}}$ is a weight ratio (%) of the lithium difluorophosphate to the total electrolyte, $W_{\text{VC}}$ is a weight ratio (%) of the vinylene carbonate to the total electrolyte, $W_{\text{PS}}$ is a weight ratio (%) of the 1,3-propane sultone to the total electrolyte, $\Phi$ is a diameter (mm) of the battery can, and H is a height (mm) of the battery can.

**ADVANTAGEOUS EFFECTS**

A cylindrical type lithium secondary battery according to the present invention is a large-capacity cylindrical type lithium secondary battery, wherein there was a need to use an electrolyte system different from a conventional electrolyte system used in an 1865 or 2170 cell. Thus, the cylindrical type lithium secondary battery according to the present invention has an effect of excellent high-temperature life characteristics and rapid charging characteristics by using an additive ratio according to an increased form factor ratio.

Specifically, vinylene carbonate and 1,3-propane sultone are additives that function to form an organic film on surfaces of a negative electrode and a positive electrode during an initial activation process, and lithium difluorophosphate is an additive that forms an inorganic film containing fluorine (F) and phosphorus (P) on the electrode during the initial activation process. In the present invention, there is an effect of excellent high-temperature life characteristics and rapid charging characteristics by allowing the required organic and inorganic films to be formed according to a form factor related to a size of the cylindrical type lithium secondary battery.

Also, the cylindrical type lithium secondary battery according to the present invention may include a silicon-based negative electrode active material having large capacity as a negative electrode active material, and, in this case, higher energy density may be achieved.

## BRIEF DESCRIPTION OF THE DRAWINGS

FIG. 1 is a view illustrating a stacked state before winding of an electrode assembly according to the present invention.
FIG. 2 is a cross-sectional view illustrating a structure of an electrode plate of an electrode assembly according to an embodiment of the present invention.
FIG. 3 is a cross-sectional view illustrating a structure of a cylindrical type battery having a tab-less structure according to an embodiment of the present invention.
FIG. 4 is a cross-sectional view illustrating a structure of a cylindrical type battery having a tab-less structure according to another embodiment of the present invention.
FIG. 5 is a view for explaining a structure of an electrode assembly according to an example of the present invention.
FIG. 6 is a view for explaining a battery pack according to the present invention.
FIG. 7 is a view for explaining a vehicle including the battery pack according to the present invention.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, the expression "primary particle" means a particle unit in which a grain boundary does not exist in appearance when observed by using a scanning electron microscope with a field of view of 5,000 times to 20,000 times. The expression "average particle diameter of the primary particle" means an arithmetic average value of particle diameters which is calculated after measuring the particle diameters of the primary particles observed in a scanning electron microscope image.

In the present invention, the expression "secondary particle" is a particle formed by aggregation of a plurality of primary particles. In the present invention, a secondary particle, in which 10 or less primary particles are aggregated, is referred to as a pseudo-single particle in order to distinguish it from a conventional secondary particle which is formed by aggregation of tens to hundreds of primary particles.

The expression "average particle diameter $D_{50}$" in the present invention means a particle size on the basis of 50% in a volume cumulative particle size distribution of positive electrode active material powder, wherein it may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter $D_{50}$ may then be measured by obtaining a particle size corresponding to 50% of cumulative amount of volume.

The expression "consist essentially of A" in the present invention indicates that component A is included as a main component, wherein, for example, it means that the component A is included in an amount of 95 wt% to 100 wt%, preferably 98 wt% to 100 wt%, and more preferably 99 wt% to 100 w%.

A cylindrical type lithium secondary battery according to the present invention includes a jelly-roll type electrode assembly having a structure in which a positive electrode plate, a negative electrode plate, and a separator disposed between the positive electrode plate and the negative electrode plate are wound in one direction; a battery can in which the electrode assembly is accommodated; and a sealing body sealing an open end of the battery can.

An electrolyte included in the cylindrical type lithium secondary battery of the present invention is characterized in that it includes a lithium salt, an organic solvent, and lithium difluorophosphate, vinylene carbonate, and 1,3-propane sultone as additives, and satisfies Equation (1) below.

$$\text{Equation (1): } 3.5 \leq W_{LiDFP}/(W_{VC} + W_{PS}) \times \Phi/H \times 100 \leq 20$$

In Equation (1), $W_{LiDFP}$ is a weight ratio (%) of the lithium difluorophosphate to the total electrolyte, $W_{VC}$ is a weight ratio (%) of the vinylene carbonate to the total electrolyte, $W_{PS}$ is a weight ratio (%) of the 1,3-propane sultone to the total electrolyte, $\Phi$ is a diameter (mm) of the battery can, and H is a height (mm) of the battery can.

A value of $W_{LiDFP}/(W_{VC} + W_{PS}) \times \Phi/H \times 100$ may be in a range of 3.5 to 20, preferably 5 to 15, and more preferably 10 to 15.

Vinylene carbonate and 1,3-propane sultone are additives that function to form an organic film on surfaces of a negative electrode and a positive electrode during an initial activation process, and lithium difluorophosphate is an additive that forms an inorganic film containing fluorine (F) and phosphorus (P) on the electrode during the initial activation process. In the present invention, there is an effect of excellent high-temperature life characteristics and rapid charging characteristics by allowing the required organic and inorganic films to be formed according to a form factor related to a size of the cylindrical type lithium secondary battery.

The electrolyte used in the cylindrical type lithium secondary battery of the present invention includes a lithium salt, an organic solvent, and additives.

The lithium difluorophosphate ($LiPO_2F_2$) used as the additive is reduced during the initial activation process to form the inorganic film containing F and P on the electrode, and the inorganic film may suppress decomposition of an electrode film even at a high temperature by improving durability of a solid electrolyte interphase (SEI) film.

The electrolyte may include the $LiPO_2F_2$ in an amount of 0.01 wt% to 1 wt%, preferably 0.1 wt% to 1 wt%, and more preferably 0.2 wt% to 0.8 wt% based on a total weight of the electrolyte.

The vinylene carbonate used as the additive is an additive that functions to form a stable organic-based negative electrode film during the initial activation process by being reduced at a low potential.

The electrolyte may include the vinylene carbonate in an amount of 0.1 wt% to 10 wt%, preferably 1 wt% to 5 wt%, and more preferably 2 wt% to 4 wt% based on the total weight of the electrolyte.

The 1,3-propane sultone used as the additive is an additive that functions to form a stable sulfur (S)-based organic film on the surfaces of the negative electrode and the positive electrode during the initial activation process.

The electrolyte may include the 1,3-propane sultone in an amount of 0.1 wt% to 2 wt%, preferably 0.1 wt% to 1.5 wt%, and more preferably 0.2 wt% to 0.5 wt% based on the total weight of the electrolyte.

The organic solvent may include at least one organic solvent selected from the group consisting of a cyclic carbonate-based organic solvent, a linear carbonate-based organic solvent, a linear ester-based organic solvent, and a cyclic ester-based organic solvent.

Specifically, the organic solvent may include a cyclic carbonate-based organic solvent, a linear carbonate-based organic solvent, or a mixed organic solvent thereof.

The cyclic carbonate-based organic solvent is an organic solvent which may well dissociate the lithium salt in the electrolyte due to high permittivity as a highly viscous organic solvent, wherein specific examples of the cyclic carbonate-based organic solvent may be at least one organic solvent selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based organic solvent may include ethylene carbonate.

The cyclic carbonate, for example, the ethylene carbonate may be included in an amount of 15 vol% to 30 vol%, preferably 15 vol% to 25 vol%, and most preferably 15 vol% to 20 vol% based on the total organic solvent. In a case in which the ethylene carbonate is included in the above range, it may help the $LiPO_2F_2$ form a uniform SEI film.

Also, the linear carbonate-based organic solvent is an organic solvent having low viscosity and low permittivity, wherein typical examples of the linear carbonate-based organic solvent may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based organic solvent may specifically include ethyl methyl carbonate (EMC).

Furthermore, the organic solvent may further include at least one ester-based organic solvent selected from the group consisting of a linear ester-based organic solvent and a cyclic ester-based organic solvent and at least one carbonate-based organic solvent selected from the group consisting of the cyclic carbonate-based organic solvent and the linear carbonate-based organic solvent to prepare an electrolyte having high ionic conductivity.

Specific examples of the linear ester-based organic solvent may be at least one organic solvent selected from the group consisting of methyl acetate, ethyl acetate, propyl acetate, methyl propionate, ethyl propionate, propyl propionate, and butyl propionate.

Also, the cyclic ester-based organic solvent may include at least one organic solvent selected from the group consisting of γ-butyrolactone, γ-valerolactone, γ-caprolactone, σ-valerolactone, and ε-caprolactone.

The organic solvent may be used by adding an organic solvent typically used in a non-aqueous electrolyte without limitation, if necessary. For example, the organic solvent may further include at least one organic solvent selected from an ether-based organic solvent, a glyme-based solvent, and a nitrile-based organic solvent.

As the ether-based solvent, any one selected from the group consisting of dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL) or a mixture of two or more thereof may be used, but the ether-based solvent is not limited thereto.

The glyme-based solvent is a solvent having higher permittivity and lower surface tension than the linear carbonate-based organic solvent as well as less reactivity with metal, wherein the glyme-based solvent may include at least one selected from the group consisting of dimethoxyethane (glyme, DME), diethoxyethane, diglyme, tri-glyme (triglyme), and tetra-glyme (TEGDME), but is not limited thereto.

The nitrile-based solvent may be at least one selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, but is not limited thereto.

The lithium salt is used as an electrolyte salt in a lithium secondary battery, wherein it is used as a medium for transferring ions. Typically, the lithium salt, for example, may include $Li^+$ as a cation, and may include at least one selected from the group consisting of $F^-$, $Cl^-$, $Br^-$, $I^-$, $NO_3^-$, $N(CN)_2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$, and $SCN^-$ as an anion.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, $LiN(SO_2F)_2$ (lithium bis (fluorosulfonyl) imide; LiFSI), $LiN(SO_2CF_2CF_3)_2$ (lithium bis(perfluoroethanesulfonyl)imide; LiBETI), and $LiN(SO_2CF_3)_2$ (lithium bis(trifluoromethanesulfonyl)imide; LiTFSI) or a mixture of two or more thereof. In addition to these materials, a lithium salt typically used in an electrolyte of a lithium secondary battery may be used without limitation.

The lithium salt may be appropriately changed in a normally usable range, but may be included in a concentration of 0.1 M to 4.0 M, preferably 0.5 M to 3.0 M, and more preferably 0.8 M to 2.0 M in the electrolyte to obtain an optimum effect of forming a film for preventing corrosion of the surface of the electrode. In a case in which the concentration of the lithium salt satisfies the above range, since an effect of improving cycle characteristics during high-temperature storage of the lithium secondary battery is sufficient and the viscosity of the non-aqueous electrolyte is appropriate, electrolyte impregnability may be improved.

Also, the non-aqueous electrolyte of the present invention may further include an electrolyte additive in order to prevent the occurrence of collapse of the negative electrode due to decomposition of the non-aqueous electrolyte in a high output environment or to further improve low-temperature high rate discharge characteristics, high-temperature stability, overcharge prevention, and an effect of suppressing battery swelling at high temperature.

Typical examples of the electrolyte additive may include at least one additive for forming a SEI film which is selected from the group consisting of a cyclic carbonate-based compound, a halogen-substituted carbonate-based compound, a sultone-based compound, a sulfate-based compound, a phosphate-based compound, a borate-based compound, a nitrile-based compound, a benzene-based compound, an amine-based compound, a silane-based compound, and a lithium salt-based compound.

The cyclic carbonate-based compound may include vinyl ethylene carbonate.

The halogen-substituted carbonate-based compound may include fluoroethylene carbonate (FEC).

The sultone-based compound may include at least one compound selected from the group consisting of 1,4-butane sultone, ethane sultone, 1,3-propene sultone (PRS), 1,4-butene sultone, and 1-methyl-1,3-propene sultone.

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro (bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may include tetraphenylborate, lithium oxalyldifluoroborate (LiODFB), and lithium bis(oxalato)borate ($LiB(C_2O_4)_2$, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, wherein the lithium salt-based compound may include $LiBF_4$.

The electrolyte may additionally include a compound selected from the group consisting of succinonitrile, propargyl-1H-imidazole-1-carboxylate, and methyl-prop-2-ynyl carbonate. In a case in which such an additive is additionally included, a more robust SEI film may be formed on the surface of the negative electrode during the initial activation process of the secondary battery, and high-temperature stability of the secondary battery may be improved by suppressing generation of a gas which may be generated due to the decomposition of the electrolyte at high temperature.

The cylindrical type lithium secondary battery according to the present invention may be a large-sized cylindrical type battery having a form factor ratio (defined as a value obtained by dividing a diameter of the cylindrical type battery by a height, that is, a ratio of the diameter ($\Phi$) to the height (H)) of 0.4 or more. Herein, the form factor means a value representing the diameter and height of the cylindrical type battery.

The cylindrical type battery according to the present invention, for example, may be a 46110 cell (diameter 46 mm, height 110 mm, form factor ratio 0.418), a 4875 cell (diameter 48 mm, height 75 mm, form factor ratio 0.640), a 48110 cell (diameter 48 mm, height 110 mm, form factor ratio 0.436), a 4880 cell (diameter 48 mm, height 80 mm, form factor ratio 0.600), a 4680 cell (diameter 46 mm, height 80 mm, form factor ratio 0.575), or a 4695 cell (diameter 46 mm, height 95 mm, form factor ratio 0.484). In a number representing the form factor, first two numbers represent the diameter of the cell, and next two or three numbers represent the height of the cell.

The cylindrical type lithium secondary battery according to the present invention significantly reduces a gas generation amount in comparison to a conventional case, and accordingly, excellent safety may be achieved even in a large-sized cylindrical type battery having a form factor ratio of 0.4 or more.

The electrode assembly included in the cylindrical type lithium secondary battery of the present invention is a jelly-roll type electrode assembly having a structure in which a positive electrode plate, a negative electrode plate, and a separator disposed between the positive electrode plate and the negative electrode plate are wound in one direction.

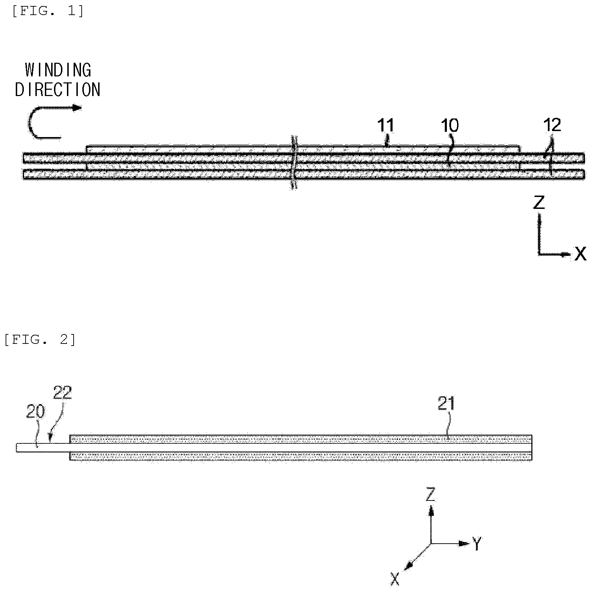

A stacked structure before winding of an electrode assembly according to the present invention is illustrated in FIG. 1, and a cross-sectional structure of an electrode plate (positive electrode plate or negative electrode plate) according to the present invention is illustrated in FIG. 2.

Referring to FIGS. 1 and 2, an electrode assembly A of the present invention may be prepared by winding a stack, which is formed by sequentially stacking a separator 12, a positive electrode plate 10, a separator 12, and a negative electrode plate 11 at least once in one direction X.

In this case, the positive electrode plate 10 and the negative electrode plate 11 have a structure in which an active material layer 21 is formed on a long sheet-shaped current collector 20, and may include a non-coating portion 22 in which the active material layer 21 is not formed in a partial region of the current collector 20.

If the positive electrode plate 10 and the negative electrode plate 11, which include the non-coating portion 22 as described above, are used, a battery having a tap-less structure, in which a separate electrode tab is not included and at least a portion of the non-coating portions of the positive electrode plate 10 and the negative electrode plate 11 defines an electrode tab, may be achieved.

Specifically, the non-coating portion 22 may be formed long along the winding direction X on one side end of the current collector 20, and the battery having a tab-less structure may be achieved by bonding a current collecting plate to each of the positive electrode plate non-coating portion and the negative electrode plate non-coating portion and connecting the current collecting plate to an electrode terminal.

For example, a battery having a tab-less structure may be prepared through the following method. First, the separator, the positive electrode plate, the separator, and the negative electrode plate are sequentially stacked such that the non-coating portions 22 of the positive electrode plate 10 and the negative electrode plate 11 are disposed in opposite directions to each other and then wound in one direction to prepare a jelly-roll type electrode assembly. Then, after bending the non-coating portions 22 of the positive electrode plate and the negative electrode plate toward a winding center C, current collecting plates are welded and bonded to the non-coating portion of the positive electrode plate and the non-coating portion of the negative electrode plate, respectively, and the battery having a tab-less structure may be prepared by connecting the current collecting plates to the electrode terminals. Since the current collecting plate has a larger cross-sectional area than a strip-type electrode tab and resistance is inversely proportional to a cross-sectional area of a passage through which current flows, cell resistance may be significantly reduced when a secondary battery is formed in the above-described structure.

The positive electrode plate and negative electrode plate non-coating portions may be processed in a form of a plurality of independently bendable segments, and at least a portion of the plurality of segments may be bent toward the winding center C of the electrode assembly.

The segments may be formed by processing the current collectors of the positive electrode plate and the negative electrode plate through a metal foil cutting process such as laser notching, ultrasonic cutting, and punching.

In a case in which the non-coating portions of the positive electrode plate and the negative electrode plate are processed in the form of the plurality of segments, deformation or damage of the non-coating portions may be prevented by reducing stress that is applied to the non-coating portions during bending, and welding characteristics with the current collecting plate may be improved.

The current collecting plate and the non-coating portion are generally bonded by welding, wherein, in order to improve the welding characteristics, a strong pressure must be applied to a welding region of the non-coating portion to bend the non-coating portion as flat as possible. However, a shape of the non-coating portion may be irregularly distorted and deformed during this bending process, and the deformed portion may contact the electrode of opposite polarity to cause an internal short circuit or cause micro-cracks in the non-coating portion. However, if the non-coating portions of the positive electrode plate and the negative electrode plate are processed in the form of the plurality of independently bendable segments, the stress applied to the non-coating portions during bending is mitigated so that the deformation and damage of the non-coating portions may be minimized.

Also, in a case in which the non-coating portion is processed in the form of segments as described above, an overlap occurs between the plurality of segments during bending, and, as a result, welding strength with respect to the current collecting plate is increased and a problem, in which, when the latest technique, such as laser welding, is used, a laser beam penetrates into the electrode assembly to ablate the separator or the active material, may be prevented. Preferably, at least a portion of the plurality of bent segments may be overlapped on an upper end and a lower end of the electrode assembly, and the current collecting plate may be bonded to the overlapped plurality of segments.

The cylindrical type battery according to the present invention may preferably be a battery having a tab-less structure which does not include an electrode tab, but is not limited thereto.

The battery having a tab-less structure, for example, may have a structure in which a positive electrode plate and a negative electrode plate each include a non-coating portion on which an active material layer is not formed, the positive electrode plate non-coating portion and the negative electrode plate non-coating portion are disposed at an upper end and a lower end of the electrode assembly, respectively, a current collecting plate is bonded to each of the positive electrode plate non-coating portion and the negative electrode plate non-coating portion, and the current collecting plate is connected to an electrode terminal. The cylindrical type lithium secondary battery according to the present invention may have a structure in which the non-coating portions of the positive electrode plate and the negative electrode plate function as electrode tabs without forming a separate electrode tab (for example, a tab-less structure). With respect to a conventional cylindrical type battery in which electrode tabs are formed, a lot of heat is generated around the electrode tab as a large amount of current is concentrated on the electrode tab during charge. Particularly, since this phenomenon intensifies during rapid charging, there is a risk of battery ignition or explosion. In contrast, the cylindrical type lithium secondary battery having a tab-less structure according to the present invention may be formed in a structure in which the non-coating portions without the active material layer are respectively formed at ends of the positive electrode plate and the negative electrode plate and the non-coating portion is connected to an electrode terminal by a method of welding it to a current collecting plate having a large cross-sectional area. Since the battery having a tab-less structure has less current concentration than a conventional battery having electrode tabs, it may effectively reduce heat generation in the battery, and, accordingly, thermal stability of the battery may be improved to suppress degradation of output characteristics.

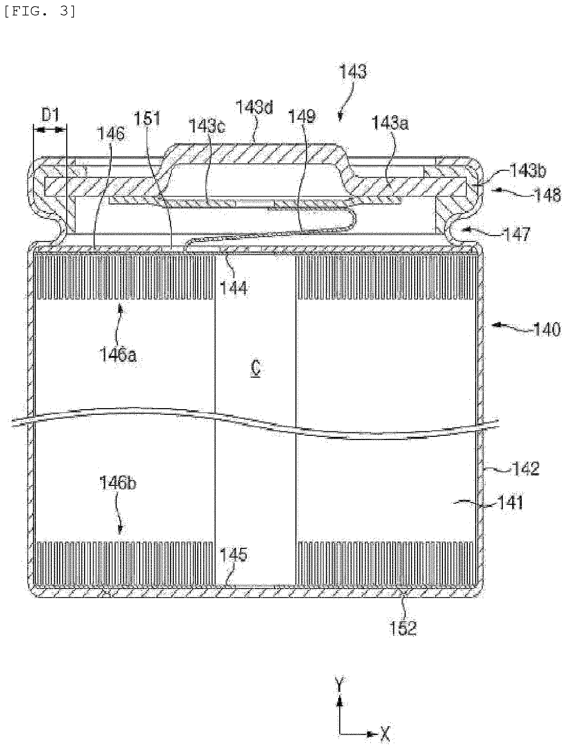

A cross-sectional view of a cylindrical type battery having a tab-less-structure according to an embodiment of the present invention is illustrated in FIG. 3. Hereinafter, the cylindrical type battery according to the embodiment of the present invention will be described with reference to FIG. 3. However, FIG. 3 only shows one embodiment of the present invention, and the structure of the cylindrical type battery of the present invention is not limited to the scope disclosed in FIG. 3.

A cylindrical type battery 140 according to an embodiment of the present invention includes a jelly-roll type electrode assembly 141 as described above, a battery can 142 in which the electrode assembly 141 is accommodated, and a sealing body 143 sealing an open end of the battery can 142.

In this case, a positive electrode plate and a negative electrode plate of the electrode assembly may each include a non-coating portion on which an active material layer is not formed, and may be stacked and wound such that the positive electrode non-coating portion and the negative electrode non-coating portion are disposed at the upper end and the lower end of the electrode assembly, respectively. Since the electrode assembly has been described above, only components other than the electrode assembly will be described below.

The battery can 142 is a cylindrical type container having an upper opening, wherein it is formed of a conductive metallic material such as aluminum or steel. The battery can accommodates the electrode assembly 141 in an inner space through the upper end opening and also accommodates an electrolyte (not shown) together.

The battery can 142 is electrically connected to a non-coating portion 146b of the negative electrode plate, and functions as a negative electrode terminal that contacts an external power source to transfer a current applied from the external power source to the negative electrode plate.

If necessary, a beading portion 147 and a crimping portion 148 may be included at an upper end of the battery can 142. The beading portion 147 may be formed by pressing an outer circumferential surface of the battery can 142 to a distance D1. The beading portion 147 prevents the electrode assembly 141 accommodated inside the battery can 142 from escaping through the upper end opening of the battery can 142, and may function as a support on which the sealing body 143 is stably placed.

The crimping portion 148 may be formed on an upper portion of the beading portion 147 and has an extended and bent shape to surround an outer circumferential surface of a cap plate 143a disposed on the beading portion 147 and a portion of an upper surface of the cap plate 143a.

Next, the sealing body 143 is for sealing the open end of the battery can 142, wherein it includes the cap plate 143a and a first gasket 143b providing airtightness between the cap plate 143a and the battery can 142 and having insulation properties, and, if necessary, may further include a connection plate 143c electrically and mechanically bonded to the cap plate 143a. The cap plate 143a may be pressed onto the beading portion 147 formed in the battery can 142 and may be fixed by the crimping portion 148.

The cap plate 143a is a component formed of a conductive metallic material, wherein it covers the upper end opening of the battery can 142. The cap plate 143a is electrically connected to the positive electrode plate of the electrode assembly 141, and is electrically insulated from the battery can 142 through the first gasket 143b. Thus, the cap plate 143a may function as a positive electrode terminal of the cylindrical type secondary battery. The cap plate 143a may include a protrusion 143d protruding upward from the center C, and the protrusion 143d may contact an external power source to allow a current to be applied from the external power source.

The first gasket 143b may be disposed between the cap plate 143a and the crimping portion 148 to secure airtightness of the battery can 142 and to electrically insulate the battery can 142 and the cap plate 143a.

The cylindrical type battery 140 according to the present invention may further include current collecting plates 144 and 145, if necessary. The current collecting plates are respectively bonded to a non-coating portion 146a of the positive electrode plate and the non-coating portion 146b of the negative electrode plate, and connected to the electrode terminals (i.e., the positive electrode terminal and the negative electrode terminal).

Specifically, the cylindrical type battery 140 according to the present invention may include the first current collecting plate 144 bonded to an upper portion of the electrode assembly 141 and the second current collecting plate 145 bonded to a lower portion of the electrode assembly 141.

The first current collecting plate 144 and/or the second current collecting plate 145 may be further included.

The first current collecting plate 144 is bonded to the upper portion of the electrode assembly 141. The first current collecting plate 144 is formed of a conductive metallic material, such as aluminum, copper, and nickel, and is electrically connected to the non-coating portion 146a of the positive electrode plate. A lead 149 may be connected to the first current collecting plate 144. The lead 149 may extend upward from the electrode assembly 141 and may be bonded to the connection plate 143c or may be directly bonded to a lower surface of the cap plate 143a. The lead 149 and other components may be bonded through welding. Preferably, the first current collecting plate 144 may be formed in one piece with the lead 149. In this case, the lead 149 may have a long plate shape extending outward from a center of the first current collecting plate 144.

The first current collecting plate 144 is bonded to an end of the non-coating portion 146a of the positive electrode plate, and the bonding, for example, may be performed by a method such as laser welding, resistance welding, ultrasonic welding, and soldering.

The second current collecting plate 145 is bonded to the lower portion of the electrode assembly 141. The second current collecting plate 145 is formed of a conductive metallic material, such as aluminum, copper, and nickel, and is electrically connected to the non-coating portion 146b of the negative electrode plate. One surface of the second current collecting plate 145 may be bonded to the non-coating portion 146b of the negative electrode plate, and an opposite surface may be bonded to an inner bottom surface of the battery can 142. In this case, the bonding may be performed by a method such as laser welding, resistance welding, ultrasonic welding, and soldering.

The cylindrical type battery 140 according to the present invention may further include an insulator 146, if necessary. The insulator 146 may be disposed to cover an upper surface of the first current collecting plate 144. Since the insulator 146 covers the first current collecting plate 144, a direct contact between the first current collecting plate 144 and an inner circumferential surface of the battery can 142 may be prevented.

The insulator 146 includes a lead hole 151 so that the lead 149 extending upward from the first current collecting plate 144 may be drawn out. The lead 149 is drawn upward through the lead hole 151 and bonded to a lower surface of the connection plate 143c or the lower surface of the cap plate 143a.

The insulator 146 may be formed of an insulating polymer resin, for example, a polymer resin material such as polyethylene, polypropylene, polyimide, or polybutylene terephthalate.

The cylindrical type battery 140 according to the present invention may further include a venting portion 152 formed on the lower surface of the battery can 142, if necessary. The venting portion 152 corresponds to a region having a thinner thickness than a surrounding region in the lower surface of the battery can 142. Since the venting portion 152 is thin, it is structurally weaker than the surrounding region. Thus, if a pressure in the cylindrical type battery 140 is increased to a certain level or higher, the venting portion 152 is ruptured and gas in the battery can 152 may be discharged to the outside to prevent explosion of the battery.

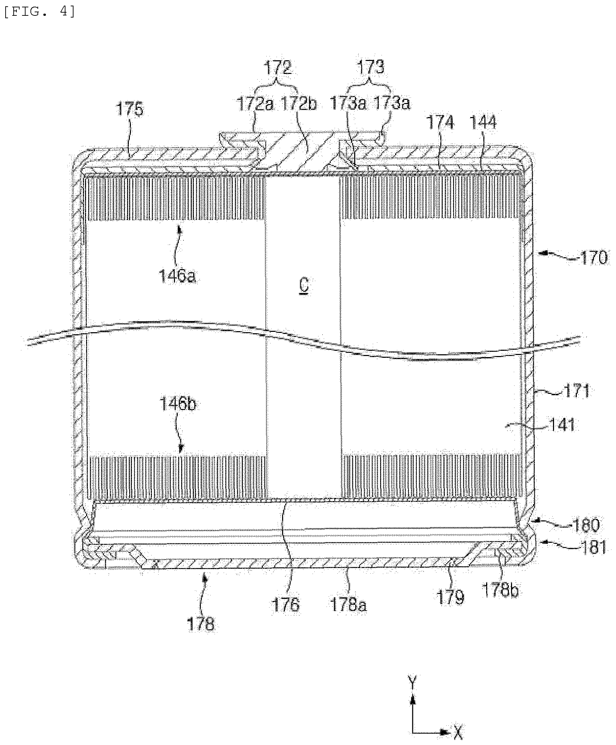

A cross-sectional view of a cylindrical type battery having a tab-less-structure according to another embodiment of the present invention is illustrated in FIG. 4. Hereinafter, the cylindrical type battery according to the another embodiment of the present invention will be described with reference to FIG. 4. However, FIG. 4 only shows one embodiment of the present invention, and the structure of the cylindrical type battery of the present invention is not limited to the scope disclosed in FIG. 4.

Referring to FIG. 4, a cylindrical type battery 170 according to another embodiment of the present invention has different structures of battery can and sealing body in comparison to the cylindrical type battery 140 illustrated in FIG. 3 and has substantially the same configurations of electrode assembly and electrolyte.

Specifically, the cylindrical type battery 170 includes a battery can 171 through which a rivet terminal 172 is installed. The rivet terminal 172 is installed on a closed surface (upper surface in the drawing) partially closed at one end of the battery can 171. The rivet terminal 172 is riveted to a through hole (first opening of a first end) of the battery can 171 in a state in which an insulating second gasket 173 is disposed therebetween. The rivet terminal 172 is exposed to the outside in a direction opposite to a direction of gravity.

The rivet terminal 172 includes a terminal exposed portion 172a and a terminal insertion portion 172b. The terminal exposed portion 172a is exposed to the outside of the closed surface of the battery can 171. The terminal exposed portion 172a may be located at approximately a center of the partially closed surface of the battery can 171. A maximum diameter of the terminal exposed portion 172a may be formed to be greater than a maximum diameter of the through hole formed in the battery can 171. The terminal insertion portion 172b may be electrically connected to the non-coating portion 146a of the positive electrode plate through approximately the center of the closed surface of the battery can 171. The terminal insertion portion 172b may be riveted on an inner surface of the battery can 171. That is, an end of the terminal insertion portion 172b may have a shape curved toward the inner surface of the battery can 171. A maximum diameter of the end of the terminal insertion portion 172b may be greater than the maximum diameter of the through hole of the battery can 171.

A lower end surface of the terminal insertion portion 172b may be welded to the first current collecting plate 144 connected to the non-coating portion 146a of the positive electrode plate. An insulating cap 174 formed of an insulating material may be disposed between the first current collecting plate 144 and the inner surface of the battery can 171. The insulating cap 174 covers an upper portion of the first current collecting plate 144 and an upper edge portion of the electrode assembly 141. Thus, it may prevent a short circuit from being caused by contact between an outer circumferential non-coating portion B3 of the electrode assembly 141 and the inner surface of the battery can 171 having a different polarity. The terminal insertion portion 172b of the rivet terminal 172 may pass through the insulating cap 174 to be welded to the first collector plate 144.

The second gasket 173 is disposed between the battery can 171 and the rivet terminal 172 to prevent an electrical contact between the battery can 171 and the rivet terminal 172 which have opposite polarities to each other. Thus, the upper surface of the battery can 171 having a substantially flat shape may function as a positive electrode terminal of the cylindrical type battery 170.

The second gasket 173 includes a gasket exposed portion 173a and a gasket insertion portion 173b. The gasket exposed portion 173a is disposed between the terminal exposed portion 172a of the rivet terminal 172 and the battery can 171. The gasket insertion portion 173b is disposed between the terminal insertion portion 172b of the rivet terminal 172 and the battery can 171. The gasket insertion portion 173b may be closely attached to the inner surface of the battery can 171 by being deformed together during the riveting of the terminal insertion portion 172b. The second gasket 173, for example, may be formed of a polymer resin having insulation properties.

The gasket exposed portion 173a of the second gasket 173 may have an extended shape to cover an outer circumferential surface of the terminal exposed portion 172a of the rivet terminal 172. In a case in which the second gasket 173 covers the outer circumferential surface of the rivet terminal 172, occurrence of a short circuit in a process of bonding an electrical connection component, such as a bus bar, to the upper surface of the battery can 171 and/or to the rivet terminal 172 may be prevented. Although not shown in the drawing, the gasket exposed portion 173a may have an extended shape to cover not only the outer circumferential surface of the terminal exposed portion 172a but also a portion of an upper surface thereof.

In a case in which the second gasket 173 is formed of the polymer resin, the second gasket 173 may be bonded to the battery can 171 and the rivet terminal 172 by heat fusion. In this case, airtightness at a bonding interface between the second gasket 173 and the rivet terminal 172 and at a bonding interface between the second gasket 173 and the battery can 171 may be enhanced. In a case in which the gasket exposed portion 173a of the second gasket 173 has a shape extending to the upper surface of the terminal exposed portion 172a, the rivet terminal 172 may be integrally bonded to the second gasket 173 by insert injection molding.

A region 175 other than regions occupied by the rivet terminal 172 and the second gasket 173 in the upper surface of the battery can 171 corresponds to a negative electrode terminal having a polarity opposite to that of the rivet terminal 172.

A second current collecting plate 176 is bonded to the lower portion of the electrode assembly 141. The second current collecting plate 176 is formed of a conductive metallic material, such as aluminum, steel, copper, and nickel, and is electrically connected to the non-coating portion 146b of the negative electrode plate.

Preferably, the second current collecting plate 176 is electrically connected to the battery can 171. For this purpose, at least a portion of an edge portion of the second current collecting plate 176 may be fixed by being disposed between the inner surface of the battery can 171 and the first gasket 178b. In one example, the at least a portion of the edge portion of the second current collecting plate 176 may be fixed to a beading portion 180 by welding while being supported on a lower end surface of the beading portion 180 formed at a lower end of the battery can 171. In a modified example, the at least a portion of the edge portion of the second current collecting plate 176 may be directly welded to an inner wall surface of the battery can 171.

The second current collecting plate 176 may have a plurality of irregularities (not shown) which are radially formed on a surface facing the non-coating portion 146b. In a case in which the irregularities are formed, the second current collecting plate 176 may be pressed to press the irregularities into the non-coating portion 146b.

Preferably, the second current collecting plate 176 and an end of the non-coating portion 146b may be bonded by welding, for example, laser welding.

A sealing body 178 sealing a lower open end of the battery can 171 includes a cap plate 178a and a first gasket 178b. The first gasket 178b electrically separates the cap plate 178a and the battery can 171. A crimping portion 181 fixes an edge of the cap plate 178a and the first gasket 178b together. A venting portion 179 is included in the cap plate 178a. A configuration of the venting portion 179 is substantially the same as that of the above-described embodiment.

Preferably, the cap plate 178a is formed of a conductive metallic material. However, since the first gasket 178b is disposed between the cap plate 178a and the battery can 171, the cap plate 178a has no electrical polarity. The sealing body 178 functions to seal the lower open end of the battery can 171 and to discharge gas when an internal pressure of the battery cell 170 is increased above a critical value.

Preferably, the rivet terminal 172 electrically connected to the non-coating portion 146a of the positive electrode plate is used as the positive electrode terminal. Also, the portion 175 excluding the rivet terminal 172 in the upper surface of the battery can 171, which is electrically connected to the non-coating portion 146b of the negative electrode plate through the second current collecting plate 176, is used as the negative electrode terminal. As described above, in a case in which the two electrode terminals are disposed on the upper portion of the cylindrical type battery, it is possible to dispose electrical connection components, such as a bus bar, on only one side of the cylindrical type battery 170.

This may lead to simplification of a battery pack structure and improvement of energy density. Furthermore, since the portion 175 used as the negative electrode terminal has a substantially flat shape, a sufficient bonding area may be secured for bonding the electrical connection components such as a bus bar. Accordingly, the cylindrical type battery 170 may reduce resistance at a bonding portion of the electrical connection component to a desired level.

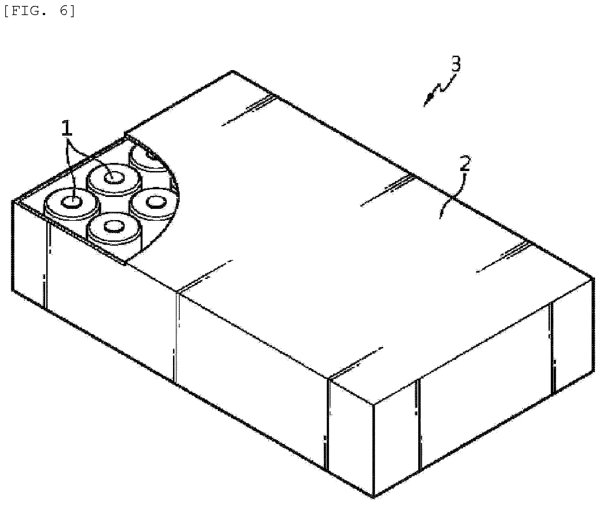

The cylindrical type lithium secondary battery of the present invention as described above may be used to prepare a battery pack. A configuration of a battery pack according to an embodiment of the present invention is schematically illustrated in FIG. 6. Referring to FIG. 6, a battery pack 3 according to an embodiment of the present invention includes an assembly in which cylindrical type secondary batteries 1 are electrically connected and a pack housing 2 accommodating the assembly. The cylindrical type secondary battery 1 is the battery cell according to the above-described embodiment. In the drawing, for convenience of illustration, parts, such as a bus bar for electrically connecting the cylindrical type secondary batteries 1, a cooling unit, and an external terminal, are omitted.

The battery pack 3 may be mounted in a vehicle. The vehicle, for example, may be an electric vehicle, a hybrid vehicle, or a plug-in hybrid vehicle. The vehicle includes a four-wheeled vehicle or a two-wheeled vehicle.

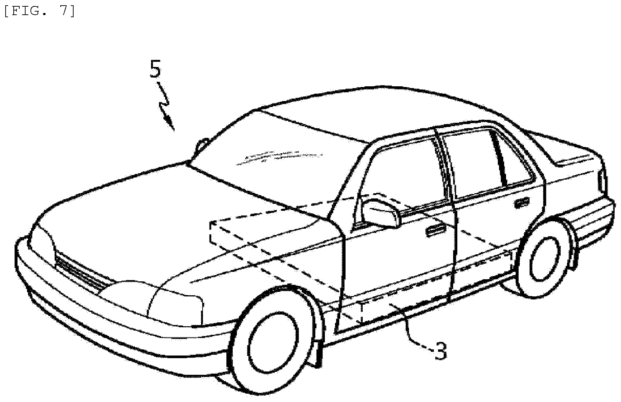

FIG. 7 is a view for explaining a vehicle including the battery pack 3 of FIG. 6.

Referring to FIG. 7, a vehicle 5 according to an embodiment of the present invention includes the battery pack 3 according to the embodiment of the present invention, and is operated by receiving power from the battery pack 3.

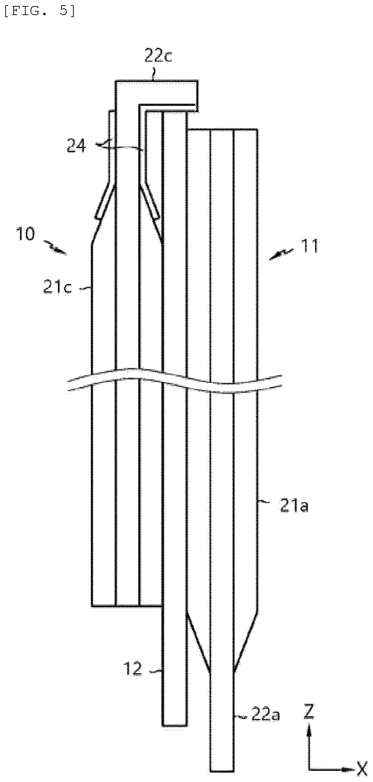

As illustrated in FIG. 5, the electrode assembly according to the present invention may be formed in a structure in which an insulation layer 24 is additionally formed on the positive electrode plate 10. Specifically, the insulation layer 24 may be formed to cover a portion of a positive electrode active material layer and a portion of the non-coating portion along a direction parallel to the winding direction of the electrode assembly.

With respect to a battery having a tab-less structure in which a non-coating portion 22c of the positive electrode plate 10 and a non-coating portion 22a of the negative electrode plate 11 are used as electrode tabs, an electrode assembly is formed such that the positive electrode plate 10 protrudes above the separator 12 and the negative electrode plate 11 protrudes below the separator 12, and the protruding positive electrode plate 10 and/or negative electrode plate 11 are bent and then bonded to the current collecting plate. In a case in which the positive electrode plate 10 or the negative electrode plate 11 is bent as described above, the current collector of the positive electrode plate 10 or the negative electrode plate 11 crosses the separator and is disposed close to the electrode having an opposite polarity, and, as a result, there is a possibility that the positive electrode plate and the negative electrode plate are electrically contacted to cause an internal short circuit. However, as illustrated in FIG. 5, in a case in which the insulation layer 24 covering the portions of the positive electrode active material layer and the non-coating portion is formed, since the electrical contact between the positive electrode plate 10 and the negative electrode plate 11 may be prevented by the insulation layer 24, occurrence of a short circuit in the battery may be prevented.

Preferably, the insulation layer 24 may be provided on at least one side of the current collector of the positive electrode plate 10, and preferably, may be provided on both sides of the positive electrode plate 10.

Also, the insulation layer 24 may be formed in a region of the positive electrode plate 10 which may face an active material layer 21a of the negative electrode plate 11. For example, on a surface of the non-coating portion 22c of the positive electrode plate 10 which faces the negative electrode plate 11 after being bent, the insulation layer 24 may be formed by extending to an end of the non-coating portion 22c. However, with respect to a surface opposite to the surface facing the negative electrode plate 11 after being bent, it is desirable that the insulation layer 24 is formed only on a portion of the non-coating portion 22c, for example, before a bending point of the non-coating portion 22c. The reason for this is that, in a case in which the insulation layer 24 is formed on an entire region of the non-coating portion of the surface opposite to the surface facing the negative electrode plate 11, since an electrical contact with the current collecting plate is not possible, it may not function as the electrode tab.

The insulation layer 24 may be used as long as it may be attached to the positive electrode plate while ensuring insulation performance, and a material or component thereof is not particularly limited. For example, the insulation layer may be an insulation coating layer or an insulation tape, and the insulation coating layer may include an organic binder and inorganic particles. In this case, the organic binder, for example, may be a styrene-butadiene rubber (SBR), and the inorganic particles may be alumina oxide, but are not limited thereto.

Next, each component of the electrode assembly of the present invention will be described in more detail.

### (1) Positive Electrode Plate

The positive electrode plate may be formed in a structure in which a positive electrode active material layer is formed on one side or both sides of a long sheet-shaped positive electrode collector, and the positive electrode active material layer may include a positive electrode active material, a conductive agent, and a binder.

Specifically, the positive electrode plate may be prepared by a method in which a positive electrode slurry, which is prepared by dispersing the positive electrode active material, the conductive agent, and the binder in a solvent such as dimethyl sulfoxide (DMSO), isopropyl alcohol, N-methylpyrrolidone (NMP), acetone, and water, is applied to one side or both sides of the long sheet-shaped positive electrode collector, the solvent of the positive electrode slurry is removed through a drying process, and rolling is performed. A positive electrode plate including a non-coating portion may be prepared by a method in which the positive electrode slurry is not applied to a partial region of the positive electrode collector, for example, one end of the positive electrode collector when the positive electrode slurry is applied.

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 $\mu$m to 500 $\mu$m, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a nonwoven fabric body, and the like.

As the positive electrode active material, positive electrode active materials commonly used in the art may be used.

Preferably, the positive electrode active material may include a lithium nickel-based oxide, and, specifically, may include a lithium nickel-based oxide containing 85 mol% or more of nickel (Ni) based on the total number of moles of transition metals. Preferably, the lithium nickel-based oxide may include Ni in an amount of 85 mol% or more to less than 100 mol%, 86 mol% or more to less than 100 mol%, or 88 mol% or more to less than 100 mol%. In a case in which the lithium nickel-based oxide having a high Ni content is used as described above, high capacity may be achieved.

More specifically, the positive electrode active material may include a lithium nickel-based oxide represented by [Formula 1] below.

$$[Formula\ 1]\qquad Li_aNi_bCo_cM^1_dM^2_eO_2$$

In Formula 1, $M^1$ may be manganese (Mn), aluminum (Al), or a combination thereof, and may preferably be Mn or Mn and Al.

$M^2$ may be at least one selected from the group consisting of zirconium (Zr), tungsten (W), yttrium (Y), barium (Ba), calcium (Ca), titanium (Ti), magnesium (Mg), tantalum (Ta), and niobium (Nb), may preferably be at least one selected from the group consisting of Zr, Y, Mg, and Ti, and may more preferably be Zr, Y, or a combination thereof. The element $M^2$ is not necessarily included, but, in a case in which it is included in an appropriate amount, it may play a role in promoting grain growth during sintering or improving crystal structure stability.

a represents a molar ratio of lithium in the lithium nickel-based oxide, wherein a may satisfy $0.8 \le a \le 1.2$, $0.85 \le a \le 1.15$, or $0.9 \le a \le 1.2$. When the molar ratio of the lithium satisfies the above range, a crystal structure of the lithium nickel-based oxide may be stably formed.

b represents a molar ratio of nickel among total metals excluding lithium in the lithium nickel-based oxide, wherein b may satisfy $0.85 \le b < 1$, $0.86 \le b < 1$, or $0.88 \le b < 1$. When the molar ratio of the nickel satisfies the above range, high energy density may be exhibited to achieve high capacity.

c represents a molar ratio of cobalt among the total metals excluding lithium in the lithium nickel-based oxide, wherein c may satisfy $0 < c < 0.15$, $0 < c < 0.14$, or $0.01 \le c \le 0.12$. When the molar ratio of the cobalt satisfies the above range, good resistance characteristics and output characteristics may be achieved.

d represents a molar ratio of element $M^1$ among the total metals excluding lithium in the lithium nickel-based oxide, wherein d may satisfy $0 < d < 0.15$, $0 < d < 0.14$, or $0.01 \le d \le 0.12$. When the molar ratio of the element $M^1$ satisfies the above range, structural stability of the positive electrode active material is excellent.

e represents a molar ratio of element $M^2$ among the total metals excluding lithium in the lithium nickel-based oxide, wherein e may satisfy $0 \le e \le 0.1$ or $0 \le e \le 0.05$.

The positive electrode active material according to the present invention may further include a coating layer including at least one coating element selected from the group consisting of Al, Ti, W, boron (B), F, P, Mg, Ni, cobalt (Co), iron (Fe), chromium (Cr), vanadium (V), copper (Cu), Ca, zinc (Zn), Zr, niobium (Nb), molybdenum (Mo), strontium (Sr), antimony (Sb), bismuth (Bi), silicon (Si), and sulfur (S) on surfaces of particles of the lithium nickel-based oxide, if necessary. Preferably, the coating element may be Al, B, Co, or a combination thereof, and most preferably, the coating element may be B.

In a case in which the coating layer is present on the surfaces of the lithium nickel-based oxide particles, a contact between the electrolyte and the lithium complex transition metal oxide is suppressed by the coating layer, and, as a result, an effect of reducing transition metal dissolution or gas generation due to a side reaction with the electrolyte may be obtained.

The positive electrode active material may be included in an amount of 80 wt% to 99 wt%, preferably 85 wt% to 99 wt%, and more preferably 90 wt% to 99 wt% based on a total weight of the positive electrode active material layer.

A form of the positive electrode active material is not particularly limited, and the positive electrode active material may be in a form of a secondary particle in which a plurality of primary particles are aggregated, in a form of a single particle composed of one primary particle, or a combination thereof.

Preferably, the positive electrode active material may include a positive electrode active material which is composed of a single particle composed of one primary particle and/or a pseudo-single particle as an aggregate of 10 or less primary particles. A large-sized cylindrical type battery having high capacity and excellent safety may be obtained by using the positive electrode active material which is composed of the single particle composed of one primary particle and/or the pseudo-single particle as an aggregate of 10 or less primary particles.

Conventionally, it was common to use a spherical secondary particle, in which tens to hundreds of primary particles are aggregated, as a positive electrode active material of a lithium secondary battery. However, with respect to the positive electrode active material in a form of a secondary particle in which many primary particles are aggregated as described above, there is a problem in that particle breakage, in which the primary particles fall off in a rolling process during preparation of a positive electrode, is likely to occur and cracks occur in the particles during charge and discharge. In a case in which the particle breakage or cracking of the positive electrode active material occurs, since a contact area with an electrolyte solution is increased, there is a problem in that gas generation is increased due to a side reaction with the electrolyte solution. If the gas generation in the cylindrical type battery is increased, since a pressure in the battery is increased, there is a risk of battery explosion. Particularly, in a case in which a volume of the cylindrical type battery is increased, since the amount of active material in the battery is increased with the increase in volume and, as a result, the gas generation amount is also significantly increased, a risk of ignition and/or explosion of the battery further increases.

In contrast, since the positive electrode active material in the form of a single particle composed of one primary particle or a pseudo-single particle, in which 10 or less primary particles are aggregated, has higher particle strength than the conventional positive electrode active material in the form of a secondary particle in which tens to hundreds of primary particles are aggregated, the particle breakage during rolling hardly occurs. Also, with respect to the positive electrode active material in the form of a single particle or a pseudo-single particle, since the number of primary particles constituting the particle is small, changes due to volume expansion and contraction of the primary particles during charge and discharge are small, and accordingly, the occurrence of cracks in the particles is significantly reduced.

Accordingly, in a case in which the positive electrode active material composed of the single particle and/or pseudo-single particle is used, the gas generation amount due to the particle breakage and the occurrence of internal cracks may be significantly reduced, and accordingly, excellent safety may be achieved even in the large-sized cylindrical type battery.

It is desirable that the positive electrode active material composed of the single particle and/or pseudo-single particle is included in an amount of 95 wt% to 100 wt%, preferably 98 wt% to 100 wt%, more preferably 99 wt% to 100 wt%, and even more preferably 100 wt% based on a weight of the total positive electrode active material included in the positive electrode active material layer. When the amount of the single particle and/or pseudo-single particle satisfies the above range, sufficient safety may be obtained when the positive electrode active material is used in a large-sized cylindrical type battery.

The positive electrode active material in the form of a single particle and/or a pseudo-single particle according to the present invention may have an average particle diameter $D_{50}$ of 5 $\mu$m or less, 4 $\mu$m or less, 3 $\mu$m or less, or 2 $\mu$m or less, for example, 0.5 $\mu$m to 5 $\mu$m, preferably 1 $\mu$m to 5 $\mu$m, and more preferably 2 $\mu$m to 5 um. When the average particle diameter $D_{50}$ of the positive electrode active material satisfies the above range, an increase in resistance may be minimized.

Since the positive electrode active material in the form of a single particle and/or a pseudo-single particle has less interface, as a diffusion path for lithium ions in the particle, between the primary particles, lithium mobility is lower than that of the positive electrode active material in the form of a secondary particle, and, as a result, resistance may be increased. This increase in resistance intensifies as a size of the particle is increased, and capacity and output characteristics are adversely affected when the resistance is increased. Thus, in the present invention, since the positive electrode active material in the form of a single particle and/or a pseudo-single particle having an average particle diameter $D_{50}$ of 5 $\mu$m or less is used to minimize a diffusion distance of lithium ions in the particle, the increase in resistance may be suppressed.

The positive electrode active material in the form of a single particle and/or a pseudo-single particle may have an average particle diameter $D_{50}$ of the primary particles of 5 $\mu$m or less, 4 $\mu$m or less, 3 $\mu$m or less, or 2 $\mu$m or less, for example, 0.5 $\mu$m to 5 $\mu$m, preferably 1 $\mu$m to 5 $\mu$m, and more preferably 2 $\mu$m to 5 $\mu$m. When the average particle diameter of the primary particles satisfies the above range, the positive electrode active material in the form of a single particle and/or a pseudo-single particle having excellent electrochemical properties may be formed. If the average particle diameter of the primary particles is excessively small, the number of aggregations of the primary particles constituting the positive electrode active material is increased to reduce an effect of suppressing the particle breakage during rolling, and, if the average particle diameter of the primary particles is excessively large, the lithium diffusion path in the primary particle may be increased to increase the resistance and degrade the output characteristics.

In the present invention, it is desirable that the positive electrode active material in the form of a single particle and/or a pseudo-single particle has a unimodal particle size distribution. Conventionally, in order to improve electrode density of the positive electrode active material layer, a bimodal positive electrode active material, in which a large-particle-diameter positive electrode active material having a large average particle diameter and a small-particle-diameter positive electrode active material having a small average particle diameter are mixed, has been widely used. However, with respect to the positive electrode active material in the form of a single particle and/or a pseudo-single particle, if the particle diameter is increased, since a lithium movement path is increased to significantly increase the resistance, a problem, in which the capacity and output characteristics are degraded, may occur when the largediameter particles are mixed and used. Thus, in the present invention, the increase in resistance may be minimized by using the positive electrode active material having a unimodal distribution.

Next, the conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on the total weight of the positive electrode active material layer.

The binder improves the adhesion between the positive electrode active material particles and the adhesion between the positive electrode active material and the positive electrode collector, wherein specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

An insulation layer covering a portion of the positive electrode active material layer and a portion of the non-coating portion may be further formed on the positive electrode plate according to the present invention, if necessary. The insulation layer may be formed along a direction parallel to the winding direction of the electrode assembly.

**(2) Negative Electrode Plate**

The negative electrode plate may be formed in a structure in which a negative electrode active material layer is formed on one side or both sides of a long sheet-shaped negative electrode collector, and the negative electrode active material layer includes a negative electrode active material, a conductive agent, and a binder.

Specifically, the negative electrode plate may be prepared by a method in which a negative electrode slurry, which is prepared by dispersing the negative electrode active material, the conductive agent, and the binder in a solvent such as dimethyl sulfoxide (DMSO), isopropyl alcohol, N-methylpyrrolidone (NMP), acetone, and water, is applied to one side or both sides of the long sheet-shaped negative electrode collector, the solvent of the negative electrode slurry is removed through a drying process, and rolling is performed. A negative electrode plate including a non-coating portion may be prepared by a method in which the negative electrode slurry is not applied to a partial region of the negative electrode collector, for example, one end of the negative electrode collector when the negative electrode slurry is applied.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a silicon-based material such as silicon (Si), a Si-Me alloy (where Me is at least one selected from the group consisting of Al, tin (Sn), Mg, Cu, Fe, lead (Pb), Zn, Mn, Cr, Ti, and Ni), $SiO_y$ (where $0<y<2$), and a Si-C composite; a lithium metal thin film; a metallic material alloyable with lithium such as Sn and Al, and any one thereof or a mixture of two or more thereof may be used.

Preferably, the negative electrode plate according to the present invention may include a silicon-based negative electrode active material. The silicon-based negative electrode active material may be Si, a Si-Me alloy (where Me is at least one selected from the group consisting of Al, Sn, Mg, Cu, Fe, Pb, Zn, Mn, Cr, Ti, and Ni), $SiO_y$ (where $0<y<2$), a Si-C composite, or a combination thereof, and may preferably be $SiO_y$ (where $0<y<2$). Since the silicon-based negative electrode active material has high theoretical capacity, the capacity characteristics may be improved when the silicon-based negative electrode active material is included.

The silicon-based negative electrode active material may be doped with $M^b$ metal, and, in this case, the $M^b$ metal may be a Group 1 metal element or a Group 2 metal element, and specifically, may be lithium (Li), Mg, or the like. Specifically, the silicon-based negative electrode active material may be Si, $SiO_y$ (where $0<y<2$), or a Si-C composite which is doped with the $M^b$ metal. With respect to the metaldoped silicon-based negative electrode active material, capacity of the active material is somewhat reduced due to the doping element, but, since it has high efficiency, high energy density may be achieved.

Also, the silicon-based negative electrode active material may further include a carbon coating layer on a surface of the particle. In this case, a carbon coating amount may be 20 wt% or less, preferably, 1 wt to 20 wt% based on a total weight of the silicon-based negative electrode active material.

Furthermore, the negative electrode plate, if necessary, may further include a carbon-based negative electrode active material as the negative electrode active material. The carbon-based negative active material, for example, may be artificial graphite, natural graphite, graphitized carbon fibers, amorphous carbon, soft carbon, or hard carbon, but is not limited thereto.

In a case in which a mixture of the silicon-based negative electrode active material and the carbon-based negative electrode active material is used as the negative electrode active material, a mixing ratio of the silicon-based negative electrode active material to the carbon-based negative electrode active material may be in a range of 1:99 to 20:80, preferably 1:99 to 15:85, and more preferably 1:99 to 10:90, as a weight ratio.

The negative electrode active material may be included in an amount of 80 wt% to 99 wt%, preferably 85 wt% to 99 wt%, and more preferably 90 wt% to 99 wt% based on a total weight of the negative electrode active material layer.

As the negative electrode collector, negative electrode collectors commonly used in the art may be used, and, for example, copper, stainless steel, aluminum, nickel, titanium, fired carbon, or copper or stainless steel that is surface-treated with one of carbon, nickel, titanium, silver, or the like, and an aluminum-cadmium alloy may be used. The negative electrode collector may typically have a thickness of 3 $\mu$m to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The conductive agent is used to provide conductivity to the negative electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on the total weight of the negative electrode active material layer.

The binder improves the adhesion between the negative electrode active material particles and the adhesion between the negative electrode active material and the negative electrode collector, wherein specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer rubber (EPDM rubber), a sulfonated-EPDM, a styrene-butadiene rubber (SBR), a fluorine rubber, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

**(3) Separator**

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

Hereinafter, the present invention will be described in more detail, according to specific examples.

**<u>Examples</u>**

**Example 1**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 3 wt% of vinylene carbonate (VC), 1 wt% of 1,3-propane sultone (PS), 0.25 wt% of $LiPO_2F_2$, 0.2 wt% of succinonitrile, and 0.3 wt% of propargyl-1H-imidazole-1-carboxylate based on a total weight of the electrolyte.

A positive electrode slurry was prepared by mixing a $Li[Ni_{0.9}Co_{0.06}Mn_{0.03}Al_{0.01}]O_2$ positive electrode active material, which was in the form of a single particle and had a unimodal particle size distribution with an average particle diameter $D_{50}$ of 3 $\mu$m, : carbon nanotubes : a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (mixture of graphite : SiO = 95:5 weight ratio) : a conductive agent (super C) : a styrene-butadiene rubber (SBR) : carboxymethyl cellulose (CMC) were mixed in a weight ratio of 96:2:1.5:0.5 in water to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare a jelly-roll type electrode assembly. After the electrode assembly prepared as described above was inserted into a cylindrical battery can having a diameter of 46 mm and a height of 80 mm, the electrolyte was injected to prepare a cylindrical type lithium secondary battery.

**Example 2**

A non-aqueous solvent was prepared by dissolving $LiPF_6$ in an organic solvent (ethylene carbonate (EC): ethylmethyl carbonate (EMC) : dimethyl carbonate (DMC) = 20:5:75 volume ratio) such that a concentration of the $LiPF_6$ was 1.3 M, and an electrolyte was prepared by adding 4 wt% of vinylene carbonate (VC), 1 wt% of 1,3-propane sultone (PS), 0.5 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Example 3**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 4 wt% of vinylene carbonate (VC), 0.5 wt% of 1,3-propane sultone (PS), 1 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Example 4**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 2 wt% of vinylene carbonate (VC), 0.5 wt% of 1,3-propane sultone (PS), 0.25 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Comparative Example 1**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 2 wt% of vinylene carbonate (VC), 1 wt% of 1,3-propane sultone (PS), 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Comparative Example 2**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 5 wt% of vinylene carbonate (VC), 1 wt% of 1,3-propane sultone (PS), 0.25 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Comparative Example 3**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 3.5 wt% of vinylene carbonate (VC), 0.5 wt% of 1,3-propane sultone (PS), 1.5 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Comparative Example 4**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 3 wt% of vinylene carbonate (VC), 0.5 wt% of 1,3-propane sultone (PS), 0.1 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Comparative Example 5**

A non-aqueous solvent was prepared by dissolving $LiPF_6$ in an organic solvent (ethylene carbonate (EC): ethylmethyl carbonate (EMC) : dimethyl carbonate (DMC) = 20:5:75 volume ratio) such that a concentration of the $LiPF_6$ was 1.3 M, and an electrolyte was prepared by adding 2 wt% of vinylene carbonate (VC), 0.5 wt% of 1,3-propane sultone (PS), 1 wt% of $LiPO_2F_2$, 0.2 wt% of succinonitrile, and 0.3 wt% of propargyl-1H-imidazole-1-carboxylate based on a total weight of the electrolyte.

A cylindrical type lithium secondary battery was prepared in the same manner as in Example 1 except that the above electrolyte was used.

**Comparative Example 6**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3 M, and an electrolyte was prepared by adding 3 wt% of vinylene carbonate (VC), 1 wt% of 1,3-propane sultone (PS), 0.25 wt% of $LiPO_2F_2$, 0.2 wt% of succinonitrile, and 0.3 wt% of propargyl-1H-imidazole-1-carboxylate based on a total weight of the electrolyte.

A positive electrode slurry was prepared by mixing a $Li[Ni_{0.9}Co_{0.06}Mn_{0.03}Al_{0.01}]O_2$ positive electrode active material, which was in the form of a single particle and had a unimodal particle size distribution with an average particle diameter $D_{50}$ of 3 $\mu$m, : carbon nanotubes : a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (mixture of graphite : SiO = 95:5 weight ratio) : a conductive agent (super C) : a styrene-butadiene rubber (SBR) : carboxymethyl cellulose (CMC) were mixed in a weight ratio of 96:2:1.5:0.5 in water to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare a jelly-roll type electrode assembly. After the electrode assembly prepared as described above was inserted into a cylindrical battery can having a diameter of 21 mm and a height of 70 mm, the electrolyte was injected to prepare a cylindrical type lithium secondary battery.

**Comparative Example 7**

A non-aqueous solvent was prepared by dissolving $LiPF_6$ in an organic solvent (ethylene carbonate (EC): ethylmethyl carbonate (EMC) : dimethyl carbonate (DMC) = 20:5:75 volume ratio) such that a concentration of the $LiPF_6$ was 1.3 M, and an electrolyte was prepared by adding 4 wt% of vinylene carbonate (VC), 1 wt% of 1,3-propane sultone (PS), 0.5 wt% of $LiPO_2F_2$, 0.2 wt% of succinonitrile, and 0.3 wt% of propargyl-1H-imidazole-1-carboxylate based on a total weight of the electrolyte.

A positive electrode slurry was prepared by mixing a $Li[Ni_{0.9}Co_{0.06}Mn_{0.03}Al_{0.01}]O_2$ positive electrode active material, which was in the form of a single particle and had a unimodal particle size distribution with an average particle diameter $D_{50}$ of 3 $\mu$m, : carbon nanotubes : a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (mixture of graphite : SiO = 95:5 weight ratio) : a conductive agent (super C) : a styrene-butadiene rubber (SBR) : carboxymethyl cellulose (CMC) were mixed in a weight ratio of 96:2:1.5:0.5 in water to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare a jelly-roll type electrode assembly. After the electrode assembly prepared as described above was inserted into a cylindrical battery can having a diameter of 21 mm and a height of 70 mm, the electrolyte was injected to prepare a cylindrical type lithium secondary battery.

**Comparative Example 8**

A non-aqueous solvent was prepared by dissolving $LiPF_6$ in an organic solvent (ethylene carbonate (EC):ethylmethyl carbonate (EMC) :dimethyl carbonate (DMC) = 20:5:75 volume ratio) such that a concentration of the $LiPF_6$ was 1.3

M, and an electrolyte was prepared by adding 3 wt% of vinylene carbonate (VC), 1 wt% of 1,3-propane sultone (PS), 0.25 wt% of $LiPO_2F_2$, 0.2 wt% of succinonitrile, and 0.3 wt% of propargyl-1H-imidazole-1-carboxylate based on a total weight of the electrolyte.

A positive electrode slurry was prepared by mixing a $Li[Ni_{0.9}Co_{0.06}Mn_{0.03}Al_{0.01}]O_2$ positive electrode active material, which was in the form of a single particle and had a unimodal particle size distribution with an average particle diameter $D_{50}$ of 3 $\mu$m, : carbon nanotubes : a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (mixture of graphite : SiO = 95:5 weight ratio) : a conductive agent (super C) : a styrene-butadiene rubber (SBR) : carboxymethyl cellulose (CMC) were mixed in a weight ratio of 96:2:1.5:0.5 in water to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare a jelly-roll type electrode assembly. After the electrode assembly prepared as described above was inserted into a cylindrical battery can having a diameter of 18 mm and a height of 65 mm, the electrolyte was injected to prepare a cylindrical type lithium secondary battery.

**Comparative Example 9**

A non-aqueous solvent was prepared by dissolving $LiPF_6$ in an organic solvent (ethylene carbonate (EC): ethylmethyl carbonate (EMC) : dimethyl carbonate (DMC) = 20:5:75 volume ratio) such that a concentration of the $LiPF_6$ was 1.3 M, and an electrolyte was prepared by adding 4 wt% of vinylene carbonate (VC), 1 wt% of 1,3-propane sultone (PS), 0.5 wt% of $LiPO_2F_2$, 0.2 wt% of succinonitrile, and 0.3 wt% of propargyl-1H-imidazole-1-carboxylate based on a total weight of the electrolyte.

A positive electrode slurry was prepared by mixing a $Li[Ni_{0.9}Co_{0.06}Mn_{0.03}Al_{0.01}]O_2$ positive electrode active material, which was in the form of a single particle and had a unimodal particle size distribution with an average particle diameter $D_{50}$ of 3 $\mu$m, : carbon nanotubes : a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (mixture of graphite : SiO = 95:5 weight ratio) : a conductive agent (super C) : a styrene-butadiene rubber (SBR) : carboxymethyl cellulose (CMC) were mixed in a weight ratio of 96:2:1.5:0.5 in water to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare a jelly-roll type electrode assembly. After the electrode assembly prepared as described above was inserted into a cylindrical battery can having a diameter of 18 mm and a height of 65 mm, the electrolyte was injected to prepare a cylindrical type lithium secondary battery.

**Experimental Example 1 - High-temperature Life Characteristics Evaluation**

High-temperature life characteristics were evaluated for the cylindrical type lithium secondary batteries prepared by Examples 1 to 4 and Comparative Examples 1 to 9.

Specifically, each of the cylindrical type lithium secondary batteries prepared by Examples 1 to 4 and Comparative Examples 1 to 9 was charged at 0.33 C rate to 4.2 V under a constant current-constant voltage (CC-CV) condition at 45°C and discharged at 0.33 C rate to 2.5 V under a CC condition. After the above charging and discharging were set as one cycle and 200 cycles were performed, capacity retention relative to initial capacity after 200 cycles was measured. Values of relative capacity retentions based on the capacity retention (indicated as 100) relative to the initial capacity after 200 cycles of the cylindrical type lithium secondary battery of Comparative Example 1 are presented in Table 1 below.

[Table 1]

| | $W_{LiDFP}/ (W_{VC} + W_{PS}) \times \Phi/H \times 100$ | Relative capacity retention (%) |
|---|---|---|
| Example 1 | 3.59 | 106 |
| Example 2 | 5.75 | 110 |
| Example 3 | 12.78 | 112 |

(continued)

| | $W_{LiDFP}/ (W_{VC} + W_{PS}) \times \Phi/H \times 100$ | Relative capacity retention (%) |
|---|---|---|
| Example 4 | 5.75 | 102 |
| Comparative Example 1 | 0.00 | 100 |
| Comparative Example 2 | 2.40 | 98 |
| Comparative Example 3 | 21.56 | 95 |
| Comparative Example 4 | 1.64 | 99 |
| Comparative Example 5 | 23.00 | 94 |
| Comparative Example 6 | 1.88 | 99 |
| Comparative Example 7 | 3.00 | 98 |
| Comparative Example 8 | 1.73 | 98 |
| Comparative Example 9 | 2.77 | 97 |

As illustrated in Table 1, it was confirmed that the cylindrical type lithium secondary batteries of Examples 1 to 4 had better life characteristics at a high temperature than the cylindrical type lithium secondary batteries of Comparative Examples 1 to 9.

### Experimental Example 2 - Rapid Charging Characteristics Evaluation

Rapid charging characteristics were evaluated for the cylindrical type lithium secondary batteries prepared by Examples 1 to 4 and Comparative Examples 1 to 9.

Specifically, each of the cylindrical type lithium secondary batteries prepared by Examples 1 to 4 and Comparative Examples 1 to 9 was charged at 2 C rate to 4.2 V under a CC-CV condition at 25°C and discharged at 0.33 C rate to 2.5 V under a CC condition. After the above charging and discharging were set as one cycle and 100 cycles were performed, capacity retention relative to initial capacity after 100 cycles was measured. Values of relative capacity retentions based on the capacity retention (indicated as 100) relative to the initial capacity after 100 cycles of the cylindrical type lithium secondary battery of Comparative Example 1 are presented in Table 2 below.

[Table 2]

| | Relative capacity retention (%) |
|---|---|
| Example 1 | 102 |
| Example 2 | 103 |
| Example 3 | 105 |
| Example 4 | 101 |
| Comparative Example 1 | 100 |
| Comparative Example 2 | 94 |
| Comparative Example 3 | 95 |
| Comparative Example 4 | 92 |
| Comparative Example 5 | 90 |
| Comparative Example 6 | 94 |
| Comparative Example 7 | 95 |
| Comparative Example 8 | 92 |
| Comparative Example 9 | 94 |

As illustrated in Table 2, it was confirmed that the cylindrical type lithium secondary batteries of Examples 1 to 4 had better rapid charging characteristics than the cylindrical type lithium secondary batteries of Comparative Examples 1 to 9.

**Claims**

1. A cylindrical type lithium secondary battery comprising:

   a jelly-roll type electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can,
   wherein the electrolyte comprises a lithium salt, an organic solvent, and lithium difluorophosphate, vinylene carbonate, and 1,3-propane sultone as additives, and
   satisfies Equation (1).

$$\text{Equation (1): } 3.5 \leq W_{LiDFP}/(W_{VC} + W_{PS}) \times \Phi/H \times 100 \leq 20$$

   wherein, in Equation (1), $W_{LiDFP}$ is a weight ratio (%) of the lithium difluorophosphate to the total electrolyte, $W_{VC}$ is a weight ratio (%) of the vinylene carbonate to the total electrolyte, and $W_{PS}$ is a weight ratio (%) of the 1,3-propane sultone to the total electrolyte, and
   $\Phi$ is a diameter (mm) of the battery can, and H is a height (mm) of the battery can.

2. The cylindrical type lithium secondary battery of claim 1, wherein the positive electrode plate and the negative electrode plate each comprise a non-coating portion on which an active material layer is not formed, and each have a structure in which at least a portion of the non-coating portion of the positive electrode plate or the negative electrode plate defines an electrode tab.

3. The cylindrical type lithium secondary battery of claim 1, wherein the cylindrical type lithium secondary battery has a form factor ratio of 0.4 or more.

4. The cylindrical type lithium secondary battery of claim 1, wherein the electrolyte comprises the lithium difluorophosphate in an amount of 0.01 wt% to 3 wt% based on a total weight of the electrolyte.

5. The cylindrical type lithium secondary battery of claim 1, wherein the electrolyte comprises the vinylene carbonate in an amount of 0.1 wt% to 10 wt% based on a total weight of the electrolyte.

6. The cylindrical type lithium secondary battery of claim 1, wherein the electrolyte comprises the 1,3-propane sultone in an amount of 0.1 wt% to 2 wt% based on a total weight of the electrolyte.

7. The cylindrical type lithium secondary battery of claim 1, wherein the organic solvent comprises ethylene carbonate.

8. The cylindrical type lithium secondary battery of claim 7, wherein the ethylene carbonate is included in an amount of 15 vol% to 30 vol% based on the total organic solvent.

9. The cylindrical type lithium secondary battery of claim 1, wherein a total concentration of the lithium salt included in the electrolyte is in a range of 0.8 M to 2 M.

10. The cylindrical type lithium secondary battery of claim 1, wherein the electrolyte additionally comprises a compound selected from the group consisting of succinonitrile, propargyl-1H-imidazole-1-carboxylate, and methyl-prop-2-ynyl carbonate.

11. The cylindrical type lithium secondary battery of claim 1, wherein the positive electrode plate comprises a positive electrode active material having an amount of nickel (Ni) among transition metals excluding lithium of 85 atm% or more.

12. The cylindrical type lithium secondary battery of claim 11, wherein the positive electrode active material is a lithium nickel-based oxide represented by [Formula 1].

   [Formula 1]     $Li_aNi_bCo_cM^1_dM^2_eO_2$

   wherein, in Formula 1, $M^1$ is manganese (Mn), aluminum (Al), or a combination thereof, $M^2$ is at least one selected from the group consisting of zirconium (Zr), tungsten (W), yttrium (Y), barium (Ba), calcium (Ca), titanium (Ti), magnesium (Mg), tantalum (Ta), and niobium (Nb), and $0.8 \leq a \leq 1.2$, $0.85 \leq b < 1$, $0 < c < 0.15$, $0 < d < 0.15$, and $0 \leq e \leq 0.1$.

13. The cylindrical type lithium secondary battery of claim 12, wherein the positive electrode active material comprises a coating layer which is formed on a surface of the lithium nickel-based oxide and includes B (boron).

14. The cylindrical type lithium secondary battery of claim 1, wherein the positive electrode plate comprises a positive electrode active material which is composed of a single particle, a pseudo-single particle, or a combination thereof.

15. The cylindrical type lithium secondary battery of claim 1, wherein the negative electrode plate comprises a silicon-based negative electrode active material and a carbon-based negative electrode active material.

16. The cylindrical type lithium secondary battery of claim 15, wherein the silicon-based negative electrode active material and the carbon-based negative electrode active material are included in a weight ratio of 1:99 to 20:80.

17. The cylindrical type lithium secondary battery of claim 1, wherein the cylindrical type lithium secondary battery is a 46110 cell, a 4875 cell, a 48110 cell, a 4880 cell, a 4680 cell, or a 4695 cell.

[FIG. 1]

WINDING
DIRECTION

11  10  12

Z
└→X

[FIG. 2]

20 22  21

Z
↑
└→Y
X

[FIG. 3]

[FIG. 4]

[FIG. 5]

EP 4 550 515 A1

[FIG. 6]

27

[FIG. 7]

## INTERNATIONAL SEARCH REPORT

| International application No. |
|---|
| **PCT/KR2023/009087** |

### A. CLASSIFICATION OF SUBJECT MATTER

**H01M 10/0587**(2010.01)i; **H01M 10/0567**(2010.01)i; **H01M 10/0569**(2010.01)i; **H01M 50/533**(2021.01)i; **H01M 50/538**(2021.01)i; **H01M 10/052**(2010.01)i; **H01M 4/525**(2010.01)i; **H01M 4/505**(2010.01)i; **H01M 4/48**(2010.01)i; **H01M 4/587**(2010.01)i

According to International Patent Classification (IPC) or to both national classification and IPC

### B. FIELDS SEARCHED

Minimum documentation searched (classification system followed by classification symbols)

H01M 10/0587(2010.01); H01M 10/052(2010.01); H01M 10/0567(2010.01); H01M 10/42(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 원통형 리튬 이차 전지(cylindrical lithium secondary battery), 전해질(electrolyte), 리튬 디플루오로포스페이트(lithium difluorophosphate), 비닐렌 카보네이트(vinylene carbonate), 1,3-프로판 술톤(1,3-propane sultone), 직경(diameter), 높이(height)

### C. DOCUMENTS CONSIDERED TO BE RELEVANT

| Category* | Citation of document, with indication, where appropriate, of the relevant passages | Relevant to claim No. |
|---|---|---|
| A | KR 10-1639858 B1 (LG CHEM, LTD.) 14 July 2016 (2016-07-14)<br>See paragraph [0003] and claims 1, 4 and 6. | 1-17 |
| A | KR 10-2021-0119144 A (SAMSUNG SDI CO., LTD.) 05 October 2021 (2021-10-05)<br>See paragraph [0096], claims 1, 3 and 8 and figure 1. | 1-17 |
| A | KR 10-2020-0074902 A (LG CHEM, LTD.) 25 June 2020 (2020-06-25)<br>See paragraphs [0029]-[0159]. | 1-17 |
| A | KR 10-2152304 B1 (SAMSUNG SDI CO., LTD.) 04 September 2020 (2020-09-04)<br>See paragraphs [0026]-[0096] and figure 1. | 1-17 |
| A | KR 10-2021-0152267 A (ENCHEM CO., LTD.) 15 December 2021 (2021-12-15)<br>See paragraphs [0057]-[0159]. | 1-17 |

☐ Further documents are listed in the continuation of Box C.　　☑ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **11 October 2023** | **11 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/009087**

| Patent document cited in search report | | | Publication date (day/month/year) | Patent family member(s) | | | Publication date (day/month/year) |
|---|---|---|---|---|---|---|---|
| KR | 10-1639858 | B1 | 14 July 2016 | CN | 104781976 | A | 15 July 2015 |
| | | | | CN | 104781976 | B | 07 July 2020 |
| | | | | EP | 2797156 | A1 | 29 October 2014 |
| | | | | EP | 2797156 | A4 | 25 February 2015 |
| | | | | EP | 2797156 | B1 | 21 June 2017 |
| | | | | JP | 2015-522209 | A | 03 August 2015 |
| | | | | JP | 6067851 | B2 | 25 January 2017 |
| | | | | KR | 10-2014-0104383 | A | 28 August 2014 |
| | | | | TW | 201505231 | A | 01 February 2015 |
| | | | | TW | I636603 | B | 21 September 2018 |
| | | | | US | 2014-0272604 | A1 | 18 September 2014 |
| | | | | US | 9608290 | B2 | 28 March 2017 |
| | | | | WO | 2014-129823 | A1 | 28 August 2014 |
| KR | 10-2021-0119144 | A | 05 October 2021 | CN | 114930598 | A | 19 August 2022 |
| | | | | US | 2023-0109373 | A1 | 06 April 2023 |
| | | | | WO | 2021-194073 | A1 | 30 September 2021 |
| KR | 10-2020-0074902 | A | 25 June 2020 | CN | 113692668 | A | 23 November 2021 |
| | | | | EP | 3879617 | A1 | 15 September 2021 |
| | | | | EP | 3879617 | A4 | 26 January 2022 |
| | | | | KR | 10-2474678 | B1 | 08 December 2022 |
| | | | | US | 2021-0328266 | A1 | 21 October 2021 |
| | | | | WO | 2020-130575 | A1 | 25 June 2020 |
| KR | 10-2152304 | B1 | 04 September 2020 | CN | 110350245 | A | 18 October 2019 |
| | | | | CN | 110350245 | B | 25 March 2022 |
| | | | | KR | 10-2019-0115291 | A | 11 October 2019 |
| | | | | US | 10998580 | B2 | 04 May 2021 |
| | | | | US | 2019-0305374 | A1 | 03 October 2019 |
| KR | 10-2021-0152267 | A | 15 December 2021 | KR | 10-2440657 | B1 | 07 September 2022 |

Form PCT/ISA/210 (patent family annex) (July 2022)

**EP 4 550 515 A1**

REFERENCES CITED IN THE DESCRIPTION

**Patent documents cited in the description**

- KR 1020220079872